Europäisches Patentamt

European Patent Office

Office européen des brevets

(11) Publication number: **0 088 592**
A2

## EUROPEAN PATENT APPLICATION

(21) Application number: 83301134.9

(51) Int. Cl.³: **G 01 N 27/30**

(22) Date of filing: **03.03.83**

(30) Priority: **09.03.82 JP 36870/82**

(43) Date of publication of application: **14.09.83**
**Bulletin 83/37**

(84) Designated Contracting States: **DE FR GB**

(71) Applicant: **AJINOMOTO CO., INC., 5-8,
Kyobashi 1-chome, Chuo-ku, Tokyo 104 (JP)**

(72) Inventor: **Niki, Katsumi, No. 243, Mameto-cho
Kohoku-ku, Yokohama-shi Kanagawa-ken (JP)**
Inventor: **Kobayashi, Katsuyoshi, No. 1974-13,
Kawashima-cho Asahi-ku, Yokohama-shi Kanagawa-ken
(JP)**
Inventor: **Inoguchi, Hiroo, No. 39, Nishigonaka
Myodaijimachi, Okazaki-shi Aichi-ken (JP)**
Inventor: **Yagi, Tatsuhiko, No. 1664-33, Kita,
Shizuoka-shi Shizuoka-ken (JP)**

(74) Representative: **Bond, Bentley George et al, Haseltine
Lake & Co. 28 Southampton Buildings Chancery Lane,
London WC2A 1AT (GB)**

(54) **Chemically modified electrodes and their uses.**

(57) There is disclosed an electrically conducting solid electrode on the surface of which a nitrogen-containing electron mediator, such as a viologen, and a strongly acidic cation exchange resin containing aromatic groups, such as polystyrenesulphonic acid, are immobilized. The electrodes can be used as hydrogen electrodes (when a redox system is coupled to the electron mediator), as oxygen electrodes (when a redox system such as a chloroplast is immobilized on the electrode), as voltametric detectors of biologically active substances, and as photochromic display elements.

-1-

## CHEMICALLY MODIFIED ELECTRODES AND THEIR USES

The invention relates to chemically modified electrically conducting solid electrodes and their uses.

It is well known that electrically conducting solid electrode surfaces can be modified by redox polymers. However, the activity of this modified electrode varies with the degree of polymerization of the redox polymer, and the electrode is active only in strong acidic solutions since electron mediators are coupled with polymers only in a strong acidic solution.

It is also well known that an electron mediator such as methyl viologen must be used in the form of a solution or a suspension with an unmodified electrode or with a chemically modified electrode. In this case, a large amount of electron mediator has to be used and, in some cases, an electrochemically inactive material which may decrease the current efficiency has to be added to the solution.

The present invention provides a new type of chemically modified electrode, on which various kinds of electron mediators can be easily immobilized, with a wide variety of applications, whereby the above-mentioned disadvantages have been solved. Thus, the invention provides an electrode which comprises an electrically conducting solid electrode on which an acidic (preferably a strong acidic) cation exchange resin containing aromatic groups and a nitrogen containing electron mediator are immobilized.

This invention is based on the inventors' finding that nitrogen-containing electron mediators are immobilized with a strong acidic cation exchange resin containing aromatic groups on electrically conducting solid electrodes, and that these electrodes can be used as stable chemically modified electrodes.

The electrically conducting solid electrodes according to this invention are, for example, (a) metal electrodes such as platinum and nickel, (b) carbonaceous electrodes such as glassy carbon and pyrolytic graphite, and (c) metal oxide semiconductor electrodes such as tin oxide and titanium oxide.

A typical example of the strong acidic cation exchange resin used in this invention is polystyrenesulphonate(PSS).

Examples of nitrogen-containing electron mediators are viologens, cytochrome $c_3$, NAD(nicotinamide-adenine dinucleotide), ferredoxins, methyl-substituted phenylenediamines, and metal complexes of a metal such a ruthenium, iron or osmium and a ligand such as 2,2'-bipyridine or 1,10-phenanthrorine. Among those nitrogen-containing electron mediators, methyl viologen (i.e. 1,1'-dimethyl-4,4'-bipyridinium salts such as the dichloride salt), hereinafter abbreviated to MV, is preferred.

Another role of PSS is to stabilize some unstable electron mediators such as phenazine and its derivatives. In other words, some unstable electron mediators such as phenazine and its derivatives are stabilized by forming a complex with PSS.

In the polymer coated electrode of the present invention, the nitrogen-containing electron mediator is preferably immobilized up to the maximum ion exchange capacity of the cation exchanger. For example, in the case of MV, four sulphonte groups in PSS immobilize one MV molecule.  When an excess amount of MV is addded to this polymer, the MV may  dissolve out from the electrode into the solution.  The saturation of the electron mediator in the polymer is unnecessary. A polymer which contains the electron mediator down to one tenth of the saturation amount is still practical in use.

The polymer coated electrode according to the present invention has the following advantages over the previously known polymer coated electrodes:

(1) The pH of the solution used as a reaction medium can be in the range of 4 to 10.  In other words, strong acidic media, which have been used for the previously known polymer coated electrodes and which are unfavourable to most reactions, are unnecessary.

(2) Electron mediators are monomeric, and easily and quantitatively immobilized in PSS.  The synthesis of polymeric mediators as previously reported for the purpose of immobilization is tedious and difficult.

(3) Unstable electron mediators such as phenazine and its derivatives become stable when coupled with PSS.

(4) The polymer coated electrodes containing an electron mediator are stable, and the thickness of the film need only be a few microns.  In other words, only a small amount of electron mediator is necessary to produce the electrode.

(5) The polymers coated on the electrodes can be moderately hydrophilic and the electron mediators in the polymer do not dissolve out into the reaction medium.

Therefore, the polymer coated electrode according to the present invention can be used as it is or can be used in combination with various chemical species and/or with light energy.

-4-

The invention also provides a hydrogen electrode comprising a polymer coated electrode on which a strong acidic cation exchange resin and a nitrogen-containing electron mediator are immobilized, and a redox system which is coupled to said electron mediator on the electrode.

Examples of the redox systems employed are hydrogenases, nitrogenases, bacteria, ferredoxins, cytochromes and NAD.

One of the redox systems is either dissolved or suspended in the reaction medium, such as phosphate buffer or tris-HCl buffer at pH 7.0, and the polymer coated electrode of the present invention is immersed into it as an anode. The counter electrode acting as a cathode may be a conventional electrode such as platinum or carbon electrode, or a polymer coated electrode of the present invention, and so on. In a solution of hydrogenase, hydrogen is quantitatively generated by electrolysis in the cathodic compartment and oxygen is generated at the counter electrode, in the pH range of 4 to 10. When the redox system is immobilized on the polymer coated electrode of the present invention, the efficiency of electrolysis is improved remarkably and the consumption of the redox system may be reduced.

The invention further provides an oxygen electrode, comprising a redox system such as a chloroplast or living green algae together with a strong acidic ion exchange resin containing aromatic groups and a nitrogen-containing electron mediator such as a viologen, immobilized on an electrically conducting solid electrode. This oxygen electrode may be immersed in the above mentioned buffer solution. When the polymer coated electrode with living green algae or a chloroplast is illuminated, electrons are eliminated from the water by the living green algae or the chloroplast and oxygen is generated.

Simultaneously, hydrogen is generated at the counter electrode. Thus, an electrical current is obtained. Bacterial chloroplasts are much more favourable than plant chloroplasts because oxygen, which depresses the current intensity, it not generated at the photo-anode.

The invention further provides a voltametric detector of biologically active substances, comprising a polymer coated electrode of the present invention.

The polymer coated electrodes of the present invention show a linear current-concentration relationship to biologically active substances when an appropriate electron mediator is chosen. Thus, this electrode is applicable to biological substances as a voltametric detector.

After a biological substance separated by a suitable method such as chromatography is added to an electrolytic solution at a pH of 4 to 10, the solution is electrolyzed in a flow cell, using a polymer coated electrode of the presnet invention and an appropriate counter electrode. The electrolytic current is proportional to the concentration of the biologically active substance. Thus, the concentration of the biologically active substance can be quantitatively determined by the measurement of the current.

Examples of favourable combinations of the nitrogen-containing electron mediator with biologically active substances are:

(i) MV with cytochrome c, hemoglobin, mioglobin, NAD, hydrogenase and E. coli;

(ii) ferredoxins with hydrogenase, nitrogenase, cytochrome c, NAD and NADP(NAD phosphate);

(iii) cytochrome $c_3$ with hydrogenases isolated from sulphate reducing bacteria; and

(iv) NAD with glucose.

The invention further provides a photochromic display element comprising a polymer coated electrode of the present invention, such as a MV-PSS polymer coated $SnO_2$ electrode (NESA glass). When a chloroplast is also immobilized on this electrode, the efficiency as photochromic display element is improved. When these electrodes are illuminated, the polymer film is coloured, while it becomes colourless in the dark. The photochromic behaviour of the polymer coated electrodes is similar to that of known polymerized viologen coated electrodes.

The polymer coated electrodes of the present invention can be prepared as follows. A strong acidic cation-exchange resin containing aromatic groups is immobilized on an electrically conducting solid, preferably by (i) plasma-polymerization, (ii) mixing with polyvinyl alcohol (PVA), or (iii) mixing with collodion solution. A nitrogen-containing electron mediator is spread on the surface of the electrically conducting solid with the ionexchange resin and the polyvinyl alcohol, collodion or acetylcellulose solution. Bovine serum albumin may be added to the polyvinyl alcohol solution as a bridging agent, whereby the stability of the polymer film on the electrically conducting solid is improved.

The immobilization of chloroplasts and living green algae on the polymer coated electrode can be effected by spreading the chloroplast or green algae in PVA solution or in collodion solution on the PSS film. Bovine serum albumin also stabilizes chloroplasts (or green algae) on the polymer film. These electrodes are used as photoanodes to generate oxygen.

A hydrogenase-coated hydrogen electrode of this invention may be prepared according to a conventional method, e.g. by immobilizing hydrogenases with polyacrylamide gel on the above-mentioned polymer coated electrode.

-7-

The invention is illustrated by the following Examples.

Example I (Preparation of tin oxide-coated glass electrode)

A tin oxide film having a thickness of about 50nm was deposited on an optically polished glass plate so that an optically transparent electrode (OTE) with a resistivity of 20 ohms/square was prepared. A rectangular portion of this $SnO_2$ coated glass plate (10 x 15 mm) was rinsed with acetone and then with distilled water. A copper wire was connected to the $SnO_2$ film by a silver epoxy composite resin, and then insulated by an epoxy resin. After the surface of the electrode had been successively rinsed with methanol, acetone and then distilled water, the $SnO_2$ surface was soaked in concentrated sulphuric acid for 5-30 seconds. Then, the surface was rinsed again with distilled water, methanol, acetone, and finally, distilled water.

Example II (Preparation of an MV-PSS film coated electrode)

(1) Chemicals used

(i) PSS:Sodium polystyrenesulphonate (NaPSS) ($\overline{M}w$=7500; degree of sulphonation=73.4%); ammonium polystyrenesulphonate ($NH_4PSS$) ($\overline{M}w$=25000; degree of sulphonation = 51.6%); polystyrenesulphonic acid ($\overline{M}w$ = 1000000; degree of sulphonation = 51.0%);

(ii) MV(manufactured by BDH and by Wako Chemical Co.);

(iii) Polyvinyl alcohol (manufactured by Karare Co., Kurare-117; degree of polymerization = 1700);

(iv) Bovine serum albumin (Sigma Chemical Co.)

(2) Preparation of MV-NaPSS-PVA solution

3 grams of polyvinyl alcohol (PVA) were dissolved in 20 ml of distilled water at room temperature. Then 0.2 grams of MV and 0.7 grams of NaPSS were dissolved in the solution by heating it gradually

-8-

up to the boiling temperature, and then the mixture was cooled down to room temperature. If it is desired to use a bridging agent, about 1% by weight of bovine serum albumin per gram of PVA is added to the mixture.

(3) Immobilization of the polymer
film on tin oxide coated glass

The above mentioned MV-NaPSS-PVA solution was spread on NESA glass(tin oxide-coated glass electrode) uniformly so that a thin polymer film was obtained. This polymer coated NESA glass was dried over silica gel in the dark for more than one day. Then, it was dried in an oven for 15 minutes at 190°C. The dry weight of the polymer film was 1.5 mg.

Example III (Preparation of a chloroplast-MV-PSS
film coated electrode)

(1) Preparation of chloroplast-PVA mixture

3 grams of PVA were dispersed in 20 ml of distilled water at room temperature, and then this mixture was heated gradually up to a temperature just below the boiling point. After a uniform solution had been obtained, it was cooled gradually to room temperature. When a bridging agent is desired, about 1% by weight of bovine serum albumin per gram of PVA is added to this polymer solution. Then, 0.28g of Anabaena cylindrica suspension (which contained about 3% by weight of chlorophyll) was suspended in this polymer solution.

(2) Immobilization of chloroplast (green algae)
on the polymer coated electrode

The chloroplast(green algae) suspension — PVA solution described in (1) was spread uniformly on the polymer coated electrode described in Example II(3), and then the electrode was dried over a desiccant at 0 to 5°C in the dark. The weight of the film was 2 mg.

A mixture of 0.4g of the chloroplast(green algae) suspension-PVA solution described in (1) above and 0.4g of the MV-NaPSS-PVA solution described in Example II(2) can also be used. This mixture is spread on an NESA glass plate so that a composite-polymer coated electrode is obtained.

Protoplasms of different kinds of green algae, such as Bryopsis maxima and Bryopsis plumosa, and photosynthetic bacteria such as Chromatium vinosum, and chromatophores obtained from these photosynthetic bacteria, have the same function as Anabaena cylindrica to photo-responses.

Example IV (Preparation of a chloroplast-MV-PSS film coated electrode)

(1) Preparation of chloroplast-collodion solution

0.03g of Anabaena cylindrica suspension as decribed in Example III was mixed with 0.9g of collodion solution and the mixture was kept for 10 minutes at room temperature. The mixture was separated into three layers or portions.

(2) Immobilization of chloroplast (green algae) on the polymer coated electrode

The top two layers or portions of the chloroplast-collodion solution described in (1) above were spread on the polymer coated electrode described in Example II(3), and the electrode was then dried over a desiccant in the dark. The weight of the film was 1.5 mg.

Different kinds of green algae and chloroplasts can be used in the same way as Anabaena cylindrica, as in Example III.

Example V (MV-NaPSS polymer film coated electrode)

A mixture of 0.88 mg of NaPSS (about 0.5 millimole) and 0.095 g of MV (about 50 millimole) were dissolved in 10 ml of distilled water. To 0.5 ml of this solution, 0.5 ml of acetylcellulose-saturated acetone solution was added, and a white precipitate formed. An excess amount of acetone was added to this suspension.

-10-

A drop of this suspension, taken by a microsyringe, was dispersed on a pyrolytic graphite electrode (0.5 cm diameter, 0.2 cm$^2$) and the electrode was then dried in the dark so that a polymer coated graphite electrode was obtained.

Example VI (Oxygen electrode)

Anabaena cylindrica was used as one of photo-systems. Three different photoanodes were prepared, namely (i) a NESA glass electrode on which Anabaena cylindrica (green algae) was immobilized, (ii) the MV-PSS polymer film coated electrode described in Example II(3), and (iii) the MV-PSS polymer coated electrode on which Anabaena cylindrica was immobilized as described in Example IV(2).

These photo-anodes were coupled with a platinum cathode in a phosphate buffer solution at a pH of 7. The photo-anodes were illuminated with a Xe-lamp, and the pboto-currents were measured with a zero-resistance ammeter. The following table gives the photo-currents of the various photo-anodes. The photo-currents are given by the difference between the current under illumination and that in the dark.

Table 1

| Electrode | $SnO_2$ | $SnO_2$-chloroplast | $SnO_2$-chloroplast | $SnO_2$-PSS-MV | $SnO_2$-PSS-MV-chloroplast |
|---|---|---|---|---|---|
| Drying Conditions | | room temp. | 0 - 5°C | 190°C | 0 - 5°C |
| Photo-current* | 0.12 | 0.21 | 0.41 | 0.53 | 2.31 |

* arbitrary units

It is apparent from this table that the MV-PSS polymer film on the electrode improves the optical yield of the photo-electric current. The MV-PSS polymer film on the electrode of the present invention is very stable, and the loss of MV from the polymer film is less than 5% after 100 to 1000 repetitions of the experiment.

0088592

-11-

<u>Example VII (Electrochemical sensor</u>
<u>for biologically active substances)</u>

An MV-PSS polymer film was immobilized on NESA glass ($3 \times 10^{-2}$ cm$^2$), and was employed as an electrochemical detector of biologically active substances. The current is proportional to the concentration of the biologically active substances.

In the case of cytochrome c, the current was 1.25 micro amperes for a concentration of 0.1 millimole and a graph of the current against the concentration passes through the origin. In the case of hemoglobin, the current is 5 micro amperes for a concentration of 0.1 millimole.

<u>Example VII (Photochromic display)</u>

The polymer coated electrode described in Example II(3) became deep blue under sun light and becomes colourless in the dark. The polymer coated electrode on which chloroplast(green algae) is immobilized, as described in Example IV(2), has the same behaviour.

CLAIMS

1.    An electrically conducting solid electrode, characterised in that on the surface thereof a nitrogen-containing electron mediator is immobilized with an acidic cation exchange resin containing aromatic groups.

2.    An electrode as claimed in claim 1, wherein both cations and anions are below the maximum ion exchange capacity and the pH is neutral.

3.    An electrode as claimed in claim 1 or 2, wherein said acidic cation exchange resin is polystyrenesulphonic acid.

4.    An electrode as claimed in claim 1, 2 or 3, wherein said electron mediator is a viologen, cytochrome $c_3$, nicotinamide-adenine dinucleotide, a ferredoxin, a methyl-substituted phenylenediamine, or a metal complex of a metal such as ruthenium, iron or osmium and a ligand such as 2,2'-bipyridine or 1,10-phenanthrorine.

5.    A hydrogen electrode, characterised in that it comprises (a) an electrically conducting solid electrode on the surface of which a nitrogen-containing electron mediator is immobilized with an acidic cation exchange resin containing aromatic groups, and (b) a redox system which is coupled to said electron mediator on the electrode.

6.    A hydrogen electrode as claimed in claim 5, wherein said redox system is hydrogenase, nitrogenase, bacterium, ferredoxin or NADH.

7.    An oxygen electrode, characterised in that it comprises an electrically conducting solid electrode on the surface of which an acidic cation exchange resin containing aromatic groups, a nitrogen-containing electron mediator such as a viologen, and a redox system such as a chloroplast, are immobilized.

8.    A voltametric detector of biologically active substances, characterised in that it comprises

0088592

an electrically conducting solid electrode on which an acidic cation exchange resin containing aromatic groups and a nitrogen-containing electron mediator, are immobilized.

9. A photochromic display element, characterised in that it comprises an electrically conducting solid electrode having on the surface thereof a composition comprising (a) an acidic cation exchange resin containing aromatic groups and (b) a nitrogen-containing electron mediator.